# EUROPEAN PATENT APPLICATION

(11) **EP 1 361 758 A1**
(43) Date of publication of application: **12.11.2003**
(21) Application number: 02291139.0
(22) Date of filing: 06.05.2002
(51) Int. Cl.: H04N 7/24

(54) **Image content reconfiguration for different device capabilities and methods therefor**

(71) Applicant: MOTOROLA, INC., Schaumburg, IL 60196 (US)
(72) Inventor: Abdesselem, Ouelid, 31000 Toulouse (FR); Cendon Martin, Bruno, 31100 Toulouse (FR); Garani, Pradeep, 31000 Toulouse (FR)
(74) Representative: Litchfield, Laura Marie

(57) **Abstract**

A data message, for example a synchronized multimedia integration language (SMIL) message or an extensible markup language (XML) based message, including image content and image content reconfiguration information that limits the extent to which the image content may be reconfigured (320) for display (330). Examples of the image content reconfiguration information, include height and width dimension limitations, image aspect ratio limitations, content rotation information, image content positioning information, image content cropping information, image content resolution information.

## Description

### FIELD OF THE INVENTIONS

The present inventions relate generally to displaying image content, for example, multimedia content, and more particularly to reconfiguring image content for devices having different capabilities or characteristics, for example different display size, pixel count, aspect ratio, among others, the inventions also relate to data messages with image content and image content reconfiguration information and methods therefor.

### BACKGROUND OF THE INVENTIONS

Portable two-way cellular radio communication handsets generally have limited display capabilities due to the relatively small visual displays incorporated in said devices. Additionally, different cellular handsets typically have different physical display characteristics, and more particularly different display sizes, pixel counts, aspect ratios and other characteristics, which limit the ability of these devices to display image information.

The Synchronized Multimedia Integration Language (SMIL) specification is a presently desired standard for implementing postcard format multi-media message transmissions, for example multi-media messaging services (MMS). The SMIL specification is an extensible mark-up language (XML) based language that allows authors to create interactive modular multi-media presentations. For example, SMIL allows authors to describe the temporal behavior of a multi-media presentation, associate hyperlinks with media objects, and describe the layout of a presentation with multiple regions on a display.

The SMIL specification modularization groups semantically related SMIL elements, attributes, and attribute values into a disjoint set of SMIL modules, which can be recombined to produce multiple SMIL profiles, each of which meets the approximate needs of a different device platform. For example, a hand held device or a cellular telephone will likely support only a small subset of SMIL modules. Typically, these devices will implement SMIL Basic Profile.

The SMIL specification includes a Content Control module including a switch element that allows authors to specify a set of alternative content configurations, one of which is selected by the recipient device to the exclusion of all other configurations based upon the display capabilities of the device.

In the present SMIL specification, the transfer of multiple content configurations to accommodate different device display capabilities is an inefficient use of bandwidth. Also, the transfer of multiple content configurations does not permit optimal usage of a particular display, since there are generally fewer configuration options than potential recipient display types. Moreover, the transfer of multiple content configurations imposes additional programming burdens on the author, and provides little or no control to the author or content provider over the display of multi-media content that does not fit on a particular display.

The various aspects, features and advantages of the present inventions will become more fully apparent to those having ordinary skill in the art upon careful consideration of the following Detailed Description of the Invention with the accompanying drawings described below.

### BRIEF DESCRIPTION OF THE DRAWINGS

FIG. 1 is a schematic of an exemplary data message including image content reconfiguration information.
FIG. 2 is an exemplary image content layout with minimum, maximum and default height and width specifications.
FIG. 3 is flow diagram for processing a data message having image content and image reconfiguration information.
FIG. 4 is a flow diagram for a generating a data message having image content and reconfiguration information.

### DETAILED DESCRIPTION OF THE INVENTIONS

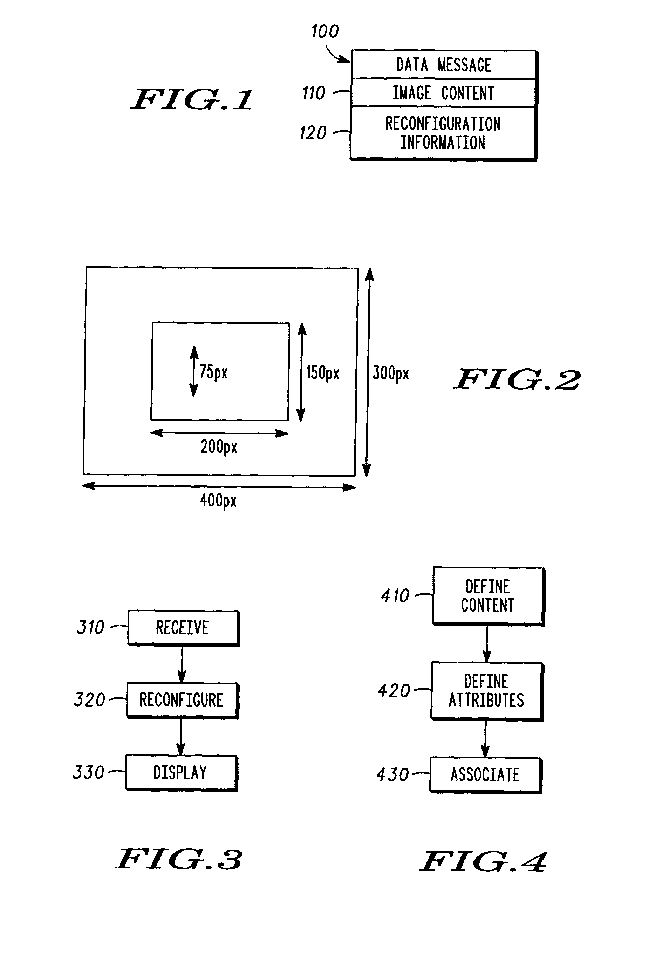

In FIG. 1, an exemplary data message 100 of the present invention comprises generally image content 110 and image content reconfiguration information 120 for use by the user in reconfiguring the image content for a particular application. In some embodiments, the image content reconfiguration information is specified by an originator of the data message, for example the data message author or a content service provider, thus enabling the data message originator to control reconfiguration of the data message by others.

In the present specification, including the detailed description and claims thereof, the term "image" includes within its meaning any displayable element, including but not limited to still images, animated images, video images, background images, region and layout definitions, borders, etc.

In some embodiments, the data messages are formulated for over-the-air transmission, for example over W-CDMA or GSM or E/GPRS and other wireless communication networks where efficient use of bandwidth is especially desirable. More generally, though, the data messages are transmitted over a wireless or a wire-line medium, including wide or local area networks.

In one exemplary embodiment, the data message is a synchronized multimedia integration language (SMIL) message. Alternatively, the data message is a Extensible Hypertext Mark-up Language (XHTML), or some other extensible markup language (XML) based language, although in other embodiments the data message may be in some other language, for example a proprietary language or an open industry standard language.

In some embodiments, the image content reconfiguration information of the data message includes image content display modification limits. The image content reconfiguration information includes, for example, height and/or width dimension limitations. The height and width dimension limitations may be minimum and/or maximum limits. In other embodiments, the image content reconfiguration information includes default image dimension information with the modification limit information.

In one embodiment, the image content display modification limit is specified in pixels. In another embodiment, the image content display modification limit is specified in physical units of length, for example centimeters or millimeters, or some other unit of measure. FIG. 2 illustrates, for example, various rectangular dimensions for an image layout or region 200. FIG. 2 includes default image region or layout height and width dimensions in pixels, (150px, 200px). FIG. 2 also illustrates image layout or region modification height minimum and maximum limits in pixels (75px, 300px), and width minimum and maximum limits in pixels (100px, 400px).

In another embodiment, the image content reconfiguration information includes an image content aspect ratio limitation, for example a minimum and/or maximum aspect ratio, which is a unit-less quantity.

In some embodiments, the image content reconfiguration information includes image content rotation information, indicating for example information on whether the image may be rotated, or rotation direction information, or rotation amount information, and combinations thereof.

In other embodiments, the image content reconfiguration information includes image content positioning information. The image content positioning information may indicate, for example, a range of locations where the image content of the data message may be located on display. The image positioning information may also specify a default image position, along with or without the image location limitation information.

In another embodiment, the image content reconfiguration information includes image content clipping information, for example, whether, where and/or how much of the image may be clipped or cropped, for example where there is insufficient display area for the entire image. The image content reconfiguration information may also include image content resolution information, including for example resolution limits and default resolution information.

In some embodiments, the data message includes combinations of one or more of the exemplary image reconfiguration information, as well as others not discussed herein. In embodiments where image content reconfiguration information includes one or more of the exemplary limits and/or variables, non-limiting examples of which were discussed above, image content prioritization information may also be included indicating the relative importance of the reconfiguration information. The image content prioritization information may also include image content reconfiguration conflict resolution information.

A data message configured with reconfiguration information, for example the dimensional limitations illustrated graphically in FIG. 2 or some other reconfiguration information, non-limiting examples of which are discussed above, correspondingly limits the extent to which an image of the data massage may be reconfigured.

In one exemplary embodiment, the data message is a synchronized multimedia integration language (SMIL) message, wherein the image content corresponds to a SMIL layout or region. In this exemplary embodiment, the image content reconfiguration information is a set of attributes associated with the layout and/or the region.

In another embodiment, the SMIL message comprises an element associated with a corresponding layout or a corresponding region, wherein the element includes a reconfiguration attribute for the corresponding layout or the corresponding region with which the element is associated.

In one embodiment, the reconfiguration attribute of the SMIL message includes upper and lower limits on a layout or region aspect ratio. In another embodiment, the reconfiguration attribute includes upper and lower limits on height and/or upper and lower limits on width. Reconfiguration of other aspects of the image may also be controlled using other reconfiguration information as discussed above.

In another embodiment, the reconfiguration attribute indicates whether the corresponding layout or region display is optional or mandatory, thus limiting the extent to which images or portions thereof may be modified or eliminated. The reconfiguration attribute may also indicate a priority of the layout or the region relative to other layouts and regions.

Below is an exemplary SMIL message region definition with a new "resize" element declaration corresponding to the exemplary dimensional limits and default values illustrated in FIG. 2: 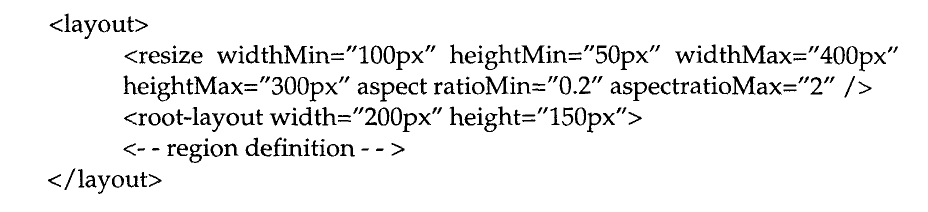 The "region definition" associates the "resize" element with the region defined. Alternatively, the element may be called something other than "resize", for example "reconfiguration". The height and width dimensional limitations are specified in pixels. Alternatively, these dimensions may be expressed in units of length or distance as discussed above.

In another exemplary embodiment, the data message is an Extensible Hype-text Mark-up Language (XHTML) message comprising table content, table content reconfiguration information. In one embodiment, the table content reconfiguration information includes a table content display reconfiguration limitation, which limits the extent to which a recipient may modify the table content. In another embodiment, the table content reconfiguration information includes a table width limitation, and in another embodiment the table content reconfiguration information includes a table aspect ratio limitation, and in other embodiments combinations of these limitations may be included, with or without prioritization information.

In FIG. 3, at block 310, a data message is typically received by an end-user, and is processed, for example, by a processor in a mobile wireless communication device or by some other image processor, for example on a personal or laptop computer, which renders image content from the data message. In some applications, it is desirable to reconfigure the image content of the data message, for example to optimize usage of device display capabilities. Thus during processing the image content is reconfigured, at block 320, subject to one or more image content reconfiguration limitations included in the data message. The reconfigured image is then displayed, at block 330 in FIG. 3, on a display device.

In FIG. 4, to generate a data message including image content and image content reconfiguration information, the data message is generated generally by defining the desired image content, at block 410, and defining image content reconfiguration information, at block 420. The image content is also associated, at block 430, with corresponding image content reconfiguration information, which includes an image content reconfiguration limitation.

In embodiments where the data message is a SMIL message, the image content is a layout or a region, and the image content is associated with the image content reconfiguration information by associating the image content with an element having a reconfiguration limitation attribute. In embodiments where the data message is an XHTML message, the image content is associated with the image content reconfiguration information by associating the image content with a table reconfiguration limitation.

Many aspects of the image content may be reconfigured according to instruction or limitations specified in the data message, examples of which were discussed above, including but not limited to height and width dimension limitations, image aspect ratio limitations, content rotation information, image content positioning information, image content cropping information, image content resolution information, and combinations thereof, including image reconfiguration prioritization information.

While the present inventions and what is considered presently to be the best modes thereof have been described in a manner that establishes possession thereof by the inventors and that enables those of ordinary skill in the art to make and use the inventions, it will be understood and appreciated that there are many equivalents to the exemplary embodiments disclosed herein and that myriad modifications and variations may be made thereto without departing from the scope and spirit of the inventions, which are to be limited not by the exemplary embodiments but by the appended claims.

## Claims

**1.** A data message comprising image content, **characterizing**:
image content reconfiguration information,
the image content reconfiguration information having an image content display modification limit.

**2.** The data message of Claim 1, **characterizing** the image content reconfiguration information including height and width dimension limitations.

**3.** The data message of Claim 1, **characterizing** the image content reconfiguration information including an image content aspect ratio limitation.

**4.** The data message of Claim 1, **characterizing** the image content reconfiguration information including image content rotation information.

**5.** The data message of Claim 1, **characterizing** the image content reconfiguration information including image content positioning information.

**6.** The data message of Claim 1, **characterizing** the image content reconfiguration information including image content clipping information.

**7.** The data message of Claim 1, **characterizing** the image content reconfiguration information including image content resolution information.

**8.** The data message of Claim 1, **characterizing** image content display modification limit specified in pixels.

**9.** The data message of Claim 1, **characterizing** image content display modification limit specified in physical units of length.

**10.** The data message of Claim 1, **characterizing** the image content reconfiguration information including minimum and maximum height limits, the image content reconfiguration information including minimum and maximum width limits.

**11.** The data message of Claim 1, **characterizing** the image content display modification limit including minimum and maximum aspect ratio limits.

**12.** The data message of Claim 1 is a synchronized multimedia integration language message, the image content corresponds to at least one of a layout or a region, **characterizing** the image content reconfiguration information is a set of attributes associated with the layout or the region.

**13.** The data message of Claim 1, **characterizing** the image content reconfiguration information including image content prioritization information.

**14.** A synchronized multimedia integration language message, comprising an element associated with at least one of a corresponding layout or a corresponding region, **characterizing**:
the element including a reconfiguration attribute for the at least one corresponding layout or the corresponding region with which the element is associated.

**15.** The synchronized multimedia integration language message of Claim 16, **characterizing** the reconfiguration attribute including upper and lower limits on aspect ratio.

**16.** The synchronized multimedia integration language message of Claim 16, **characterizing** the reconfiguration attribute including upper and lower limits on height, the dimension reconfiguration attribute including upper and lower limits on width.

**17.** The synchronized multimedia integration language message of Claim 14, **characterizing** the reconfiguration attribute including an aspect ratio attribute for the at least one corresponding layout or the corresponding region with which the element is associated.

**19.** The synchronized multimedia integration language message of Claim 14, **characterizing** the reconfiguration attribute indicating whether the corresponding layout or the region display is optional or mandatory.

**20.** The synchronized multimedia integration language message of Claim 14, **characterizing** the reconfiguration attribute indicating a priority of the layout or the region relative to other layouts and regions.

**21.** An extensible hypertext markup language (XHTML) message comprising table content, **characterizing**:
table content reconfiguration information,
the table content reconfiguration information including table content display reconfiguration limitations.

**22.** The XHTML message of Claim 21, **characterizing** the table content reconfiguration information including a table width limitation.

**23.** The XHTML message of Claim 21, **characterizing** the table content reconfiguration information including a table aspect ratio limitation.

**24.** A data message processing method comprising rendering image content from the data message, **characterizing**:
reconfiguring the image content subject to an image content reconfiguration limitation included in the data message.

**25.** The method of Claim 24, **characterizing** reconfiguring the image content subject to height and width limitations included in the data message.

**26.** The method of Claim 24, **characterizing** reconfiguring the image content subject to an aspect ratio limitation included in the data message.

**27.** The method of Claim 24, the data message is a synchronized multimedia integration language message, the image content is at least one of a layout or a region, **characterizing** reconfiguring the image content subject to a reconfiguration limitation attribute of an element associated with the image content included in the data message.

**28.** The method of Claim 24, the data message is an XHTML message, **characterizing** reconfiguring the image content subject to a table dimension limitation included in the data message.

**29.** The method of Claim 24, **characterizing** reconfiguring the image content within minimum and maximum dimensional limitations included in the data message.

**30.** The method of Claim 24, **characterizing** reconfiguring the image content within physical boundaries of a display.

**31.** The method of Claim 24, **characterizing** clipping the image content along one dimension and adjusting the image content along another dimension subject to the image content reconfiguration limitation included in the data message.

**32.** The method of Claim 24, **characterizing** clipping the image content along a dimension, downsizing the image content subject to a content aspect ratio limitation included in the data message.

**33.** A data message generation method comprising defining image content, **characterizing**:
defining image content reconfiguration information;
associating the image content with image content reconfiguration information,
the image content reconfiguration information includes an image content reconfiguration limitation.

**34.** The data method of Claim 33, the data message is a synchronized multimedia integration language (SMIL) message, the image content is at least one of a layout or a region, **characterizing** associating the image content with the image content reconfiguration information by associating the image content with an element having a reconfiguration limitation attribute.

**35.** The data method of Claim 33, the data message is an XHMTL message, **characterizing** associating the image content with the image content reconfiguration information by associating the image content with a table reconfiguration limitation.

**36.** Apparatus for processing a data message according to a method as claimed in any of claims 24 to 32, comprising means responsive to said image content reconfiguration limitation included in the data message for reconfiguring the image content subject.

**37.** Apparatus for generating a data message according to a method as claimed in any of claims 33 to 35, comprising means for associating the image content with image content reconfiguration information and for including said image content reconfiguration limitation in the data message for reconfiguring the image content subject.
